# EUROPÄISCHE PATENTSCHRIFT

(11) **EP 0 315 705 B1**
(45) Veröffentlichungstag und Bekanntmachung des Hinweises auf die Patenterteilung: **17.02.1993**
(21) Anmeldenummer: 87116480.2
(22) Anmeldetag: 07.11.1987
(51) Int. Cl.: H01R 13/717, G02B 6/42

(54) **Leiterplattenanschlusselement**
Circuit board connection element
Elément de connexion pour plaque de câblage

(43) Veröffentlichungstag der Anmeldung: 17.05.1989
(73) Patentinhaber: Weidmüller Interface GmbH & Co., D-32760 Detmold (DE)
(72) Erfinder: Fricke, Herbert, D-4930 Detmold (DE); Strate, Klaus, D-4930 Detmold (DE); Wilmes, Manfred, D-4930 Detmold (DE); Frikkee, Arian, D-4930 Detmold (DE)
(74) Vertreter: Stracke, Alexander, Dipl.-Ing.

(56) Entgegenhaltungen:
- DE-B- 3 005 652
- FR-A- 2 512 217

## Beschreibung

Die Erfindung betrifft ein Leiterplattenanschlußelement mit integrierter Statusanzeige durch mit der Leiterplatte verbundene Leuchtdioden, wobei bei direkt auf der Leiterplatte befestigten Leuchtdioden ein sich zwischen der Leuchtdiode und einer sichtbaren Oberfläche des Anschlußelementes erstreckendes Adapterteil aus lichtleitendem Material vorgesehen ist, für das das Anschlußelement eine Aufnahme aufweist.

Der bei mit besonders langen Anschlußbeinen versehenen, im Inneren der Anschlußelemente zu integrierenden Spezialleuchtdioden (DE 32 33 153 C2) vorhandene Montageaufwand, der daraus resultiert, daß diese Spezialdioden zunächst in den Anschlußelementen in einer ihre Sichtbarkeit an einer der sichtbaren Oberflächen der Anschlußelemente ermöglichenden Weise montiert werden müssen und dann auch noch Montagearbeiten durchgeführt werden müssen, um später den Kontakt der Leuchtdiode zur Leiterplatte zu gewährleisten, entfällt bei einem Leiterplattenanschlußelement der gattungsgemäßen Art (DE-B-3 005 652). Es ist eine bezüglich Montage und konstruktiver Ausgestaltung einfache Integration möglich.

Bei dem bekannten Leiterplattenelement endet dabei die Stirnfläche des schaftartigen lichtleitenden Adapterteiles in der Nähe der sichtbaren Oberfläche des Anschlußelementes.

Der vorliegenden Erfindung liegt die Aufgabe zugrunde, ein Leiterplattenanschlußelement der gattungsgemäßen Art zu schaffen, das eine besonders gute Sichtbarkeit der Anzeige in Verbindung mit einer einfachen Anbringungsgemöglichkeit am Anschlußelement und mit zusätzlichen Anschlußmöglichkeiten gewährleistet.

Die erfindungsgemäße Lösung besteht darin, daß die Adapterteile aus lichtleitendem Material jeweils mit einem Kopfstück aus lichtleitendem Material verbunden sind. Derartige Kopfstücke können einmal optisch sehr gut sichtbar im Bereich der sichtbaren Oberfläche des Anschlußelementes angeordnet werden und ermöglichen auch eine lagesichere definierte Anbringung der Adapterteile in den Anschlußelementen. Bei entsprechender weiterer Ausgestaltung können die Kopfstücke darüber hinaus dazu benutzt werden, weiter, beispielsweise zu einer Sammelstelle führende Lichtleiter im Sinne der Lichtübertragung in einfacher Weise daran anzuschließen.

Bevorzugte weitere Ausgestaltungen sind in den Unteransprüchen gekennzeichnet. So können die Kopfstücke zweckmäßig mittels einer Rastverbindung an dem Anschlußelement festlegbar sein, was zu einer unverlierbaren Halterung der Adapterteile am Anschlußelement führt.

Man kann dabei auch das Adapterteil und das Kopfstück zweiteilig ausbilden. In diesem Fall ist zweckmäßig das Kopfstück mittels einer Steck-Schiebeverbindung an dem Anschlußelement festlegbar.

Gemäß einer besonders bevorzugten Ausführungsform haben die Kopfstücke eine Aufnahme sowie eine Klemme zum Festlegen eines weiterführenden Lichtleiters, so daß ein solcher weiterführender Lichtleiter, lichtführend zuverlässig verbunden, mit dem Kopfstück verknüpft werden kann und dann zu einer anderen räumlich entfernt liegenden Stelle, beispielsweise an einer Sammeltafel in einem größeren Schaltschrank, geführt werden kann, um dort ebenfalls eine entsprechende Statusanzeige zu ermöglichen.

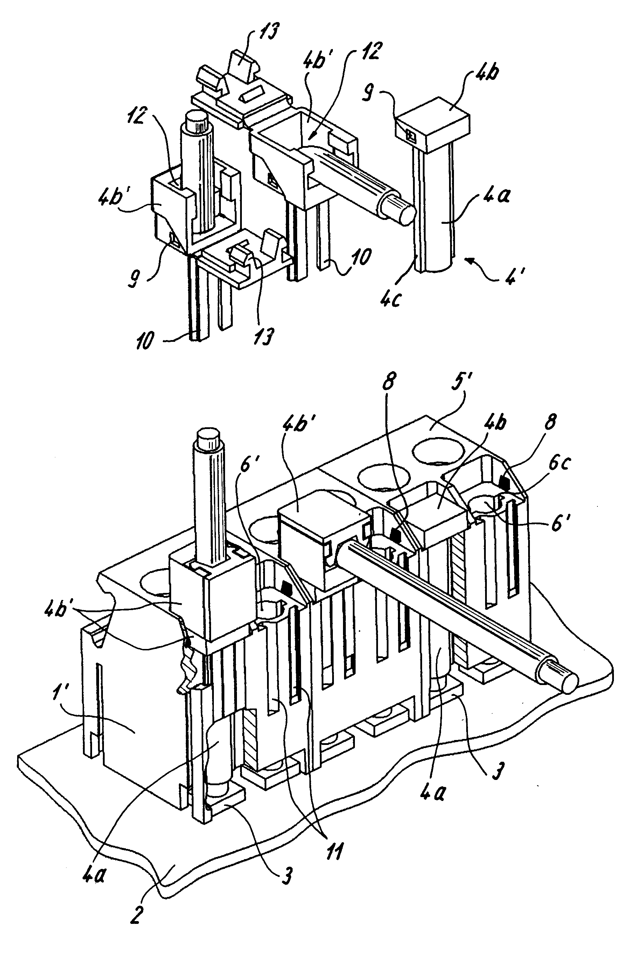

Ein Ausführungsbeispiel eines Leiterplattenanschlußelementes gemäß der Erfindung wird nachstehend unter Bezugnahme auf die Zeichnung beschrieben.

Die Zeichnung zeigt in sprengbildlicher Darstellung ein Leiterplattenanschlußelement gemäß der Erfindung in Form einer Klemmenleiste mit der integrierten Statusanzeige sowie mit einer Illustration der Anschlußmöglichkeiten weiterer lichtleitender Zusatzteile.

Bei dem dargestellten Ausführungsbeispiel ist als Leiterplattenanschlußelement 1' eine mehrpolige Klemmleiste gezeigt, die sich beispielsweise aus einzelnen Klemmenleistenstücken beliebiger Polzahl zusammensetzt und die mit den üblichen Anschlußtechniken mechanisch und elektrisch mit einer Leiterplatte 2 verbunden ist. Für eine integrierte Statusanzeige sind auf der Leiterplatte 2 ferner handelsübliche Leuchtdioden 3 direkt unter Zuhilfenahme der üblichen Anschlußtechniken auf der Leiterplatte 2 festgelegt. Nach Festlegung der Leuchtdioden 3 erfolgt dann die Anbringung der Anschlußklemmenleiste 1' auf der Leiterplatte 2. Die Anschlußklemmenleisten 1' haben dabei im Bodenbereich einen Hohlraum, in den die Leuchtdioden 3 eintreten können. Im Isolierstoffgehäuse der Anschlußklemmenleistenteile 1' befinden sich ferner senkrecht verlaufende Bohrungen 6', die ausgehend von der Aufnahmezone der Leuchtdiode 3 auf der sichtbaren Oberfläche 5' münden, und zwar in einer im einzelnen noch nachfolgend zu beschreibenden Aufnahmezone.

In den Bohrungen 6' können Adapterteile 4' angeordnet werden, die sich dann zwischen den Leuchtdioden 3 und der sichtbaren Oberfläche 5' des Anschlußelementes 1' erstrecken. Die Adapterteile bestehen auslichtleitendem Material. Im dargestellten Ausführungsbeispiel sind als Adapterteile 4' aus lichtleitendem Material Spritzteile vorgesehen, die einen in die Bohrungen 6' einsteckbaren Schaft 4a sowie ein Kopfstück 4b aufweisen. Dabei sind zweckmäßig am Schaft 4a noch Führungsleisten 4c vorgesehen, für die in der Bohrung 6' die entsprechenden Aufnahmenuten 6c vorgesehen sind, so daß ein bezüglich der Lage des Kopfteiles 4b zielgerechtes Einführen des Adapterteiles 4' in die Bohrung 6' möglich ist. Im dargestellten Ausführungsbeispiel ist ferner in der Oberfläche 5' des Leiterplattenanschlußelementes 1' jeweils an entsprechender Stelle eine kleine Einsenkung ausgebildet, in die das Kopfstück 4b der Adapter 4' lagegerecht eingesetzt werden kann. Ferner sind zweckmäßig zur sicheren Festlegung an den Seitenwandungen der kleinen Aussparung Rastelemente 8 vorgesehen, zu deren Aufnahme seitlich am Kopfstück 4b Rastaufnahmen 9 vorgesehen sind. Insgesamt bekommen die Adapterteile 4' auf diese Weise eine definierte und gegen ein Herausfallen gesicherte Lage. Die Kopfteile 4b bestehen aus lichtleitendem Material und sie sind zweckmäßig zur nochmaligen Erhöhung der guten Sichtbarkeit an ihrer Oberfläche strukturiert.

In Abwandlung der vorstehend beschriebenen Ausführungsform können an derartigen Kopfstücken auch Abschnitte handelsüblicher Lichtleiter befestigt werden, was insbesondere dann zweckmäßig erscheint, wenn beispielsweise bei sogenannten Frontanschlußelementen die leuchtenden Kopfstücke auf der Frontseite liegen sollen und von daher eine gekrümmte Wegbahn für den Verlauf des schachtartigen Teiles des Adapterteiles 4' zur Leuchtdiode 3 hin erforderlich wird. Die handelsüblichen Lichtleiter können insoweit problemlos in eine gekrümmte Form gebracht werden.

Die Adapterteile 4' können einstückig aus dem Schaft 4a und dem Kopfstück 4b bestehen. Es ist auch möglich, das Adapterteil zweistückig auszubilden. Man kann dann das gesonderte Schaftstück 4a einfach in die Bohrung 6' einstecken und legt das Kopfstück für sich gesondert am Gehäuse der Anschlußklemmenleiste 1 fest. Dazu ist eine Steck-Schiebeverbindung zweckmäßig. Bei dem entsprechenden, in der Zeichnung ebenfalls illustrierten Kopfstück 4b' sind an diesem zwei nach unten weisende, schwalbenschwanzförmig ausgestaltete Steckfüße 10 vorgesehen, für die entsprechend schwalbenschwanzförmig ausgebildete Stecknuten 11 im Gehäusewandbereich der Anschlußklemmleiste 1' vorgesehen sind. Die Montageweise ist im linken Eckbereich des unteren Teiles der Zeichnung illustriert.

Es kann bei derartigen Leiterplattenanschlußelementen das Bedürfnis bestehen, nicht nur eine integrierte Statusanzeige direkt am Pol der Elemente selbst zu haben, sondern womöglich zusätzlich auch noch eine weitere Anzeige an einer anderen, räumlich entfernt liegenden Stelle an einer Schalttafel, in einem größeren Schaltschrank oder dergleichen. Zu diesem Zweck ist in der Zeichnung illustriert, daß die Möglichkeit besteht, dem Kopfstück 4b' des Adapterteiles 4' eine Leiterklemmeinrichtung zuzuordnen, wozu im dargestellten Ausführungsbeispiel das Kopfstück 4b' einen Aufnahmeraum 12 mit entsprechender, von außen zugänglicher Stecköffnung aufweist und eine Begrenzungswand des Kopfstückes 4b' als Deckelelement ausgebildet ist, dem Klemmstücke 13 zugeordnet sind. Auf diese Weise kann in das Kopfstück 4b' ein zu der Sammelstelle führender Lichtleiter im Sinne der Lichtübertragung kontaktierend eingesteckt werden und mittels der Klemmstücke 13 in dieser Lage fixiert werden. Beim vorstehend beschriebenen Ausführungsbeispiel ist im Inneren des Leiterplattenanschlußelementes 1' Raum für die Bohrung 6' zur Aufnahme des Adaptersteiles 4' vorhanden. Ist eine solche Ausgestaltung nicht möglich, wie es beispielsweise der Fall sein kann, wenn etwaige Durchgangsbohrungen für Prüfstecker oder dergleichen benötigt werden, kann ein vergleichbares Adapterteil aus lichtleitendem Material sozusagen im Huckepack auf der Rückseite des Gehäuses des Leiterplattenanschlußelementes festgelegt werden, beispielsweise mit einer Steckverbindung vergleichbar der Steckfüße 10 am Kopfstück 4b' und einer Aufnahme in Form entsprechend den Aufnahmenuten 11 auf der Rückseite des Gehäuses des Leiterplattenanschlußelementes.

## Patentansprüche

1. Leiterplattenanschlußelement (1') mit integrierter Statusanzeige durch mit der Leiterplatte (2) verbundene Leuchtdioden (3), wobei bei direkt auf der Leiterplatte (2) befestigten Leuchtdioden (3) ein sich zwischen der Leuchtdiode (3) und einer sichtbaren Oberfläche (5') des Anschlußelementes (1') erstreckendes Adapterteil (4') aus lichtleitendem Material vorgesehen ist, für das das Anschlußelement (1') eine Aufnahme (6') aufweist, **dadurch gekennzeichnet,** daß die Adapterteile (4') aus lichtleitendem Material jeweils mit einem Kopfstück (4b, 4b') aus lichtleitendem Material verbunden sind.

2. Leiterplattenanschlußelement nach Anspruch 1, dadurch gekennzeichnet, daß die Kopfstücke (4b, 4b') der Adapterteile (4') mittels einer Rastverbindung (8, 9) an dem Anschlußelement (1) festlegbar sind.

3. Leiterplattenanschlußelement nach Anspruch 1 oder 2, dadurch gekennzeichnet, daß die Kopfstücke (4b, 4b') der Adapterteile (4') mittels einer Steck-Schiebeverbindung (10, 11) an den Anschlußelementen (1') festlegbar sind.

4. Leiterplattenanschlußelement nach einem der vorhergehenden Ansprüche, dadurch gekennzeichnet, daß den Kopfstücken (4b') eine Aufnahme (12) sowie eine Klemme (13) zum Festlegen eines weiterführenden Lichtleiters zugeordnet sind.

## Claims

1. A printed circuit board terminal element (1') with integrated status display by light emitting diodes (3) connected to the printed circuit board (2), wherein, with light emitting diodes (3) directly fixed on the printed circuit board (2), there is provided an adaptor portion (4') of light-conducting material which extends between the light emitting diode (3) and a visible surface (5') of the terminal element (1') and for which the terminal element (1') has a receiving means (6'), characterised in that the adaptor portions (4') of light-conducting material are each connected to a respective head part (4b, 4b') of light-conducting material.

2. A printed circuit board terminal element according to claim 1 characterised in that the head parts (4b, 4b') of the adaptor portions (4') can be feed to the terminal element (1') by means of a detent connection (8, 9).

3. A printed circuit board terminal element according to claim 1 or claim 2 characterised in that the head parts (4b, 4b') of the adaptor portions (4') can be feed to the terminal element (1') by means of a plug-in push connection (10, 11).

4. A printed circuit board terminal element according to one of the preceding claims characterised in that associated with the head parts (4b') are a receiving means (12) and a clamp (13) for fixing an extension light guide.

## Revendications

1. Élément de raccordement de plaquettes de circuits imprimés (1'), avec des affichages d'état intégrés s'effectuant au moyen de diodes luminescentes (3) reliées à la plaquette de circuits imprimés (2), dans lequel, dans le cas de diodes luminescentes (3) fixées directement sur la plaquette de circuits imprimés (2), est prévue une partie d'adaptation (4'), s'étendant entre la diode luminescente (3) et une surface visible (5') de l'élément de raccordement (1'), réalisée en un matériau conducteur de la lumière, pour laquelle l'élément de raccordement (1') présente un logement (6'), caractérisé en ce que les parties d'adaptation (4') en matériau conducteur de la lumière sont chacune reliées à une pièce de tête (4b,4b') en matériau conducteur de la lumière.

2. Élément de raccordement de plaquettes de circuits imprimés selon la revendication 1, caractérisé en ce que les pièces de tête (4b,4b') des parties d'adaptation (4') sont susceptibles d'être fixées à l'élément de raccordement (1), au moyen d'une liaison à encliquetage (8,9).

3. Élément de raccordement de plaquettes de circuits imprimés selon la revendication 1 ou 2, caractérisé en ce que les pièces de tête (4b,4b') des parties d'adaptation (4') sont susceptibles d'être fixées aux éléments de raccordement (1'), au moyen d'une liaison à enfoncement et enfichage (10,11).

4. Élément de raccordement de plaquettes de circuits imprimés selon l'une des revendications précédentes, caractérisé en ce qu'un logement (12) ainsi qu'une borne (13) destinée à la fixation d'un guide de lumière prolongeant la transmission sont associés aux pièces de tête (4b').
